Europäisches Patentamt

European Patent Office

Office européen des brevets

(19)

(11) Publication number: **0 009 276**
**B1**

## EUROPEAN PATENT SPECIFICATION

(12)

(45) Date of publication of patent specification: **16.02.83**

(51) Int. Cl.³: **C 08 L 23/14, C 08 L 53/00**

(21) Application number: **79200489.7**

(22) Date of filing: **05.09.79**

(54) Propylene polymer composition with talc, and moulded article made therefrom.

(30) Priority: **16.09.78 NL 7809450**

(43) Date of publication of application:
**02.04.80 Bulletin 80/7**

(45) Publication of the grant of the patent:
**16.02.83 Bulletin 83/7**

(84) Designated Contracting States:
**AT BE CH DE FR GB IT NL SE**

(56) References cited:
**DE - A - 2 033 803**
**DE - A - 2 233 289**
**FR - A - 1 506 769**
**FR - A - 2 360 625**
**FR - A - 2 372 196**
**GB - A - 1 348 839**

(73) Proprietor: **STAMICARBON B.V.**
**Postbus 10**
**NL-6160 MC Geleen (NL)**

(72) Inventor: **Hoen, Nicolaas Gerard Marie**
**Hugo de Grootstraat 1**
**NL-6181 BG Elsloo (L.) (NL)**

(74) Representative: **Hoogstraten, Willem Cornelis**
**Roeland et al,**
**OCTROOIBUREAU DSM Postbus 9**
**NL-6160 MA Geleen (NL)**

Courier Press, Leamington Spa, England

# 0 009 276

## Propylene polymer composition with talc, and moulded article made therefrom

The invention relates to a polymer composition with a high filler content on the basis of a crystalline propylene polymer and talc that is suitable for the manufacture of moulded articles.

Polymer compositions on the basis of crystalline propylene polymer with a high filler content in order to reach a high heat distortion temperature and to keep the combustion heat of the composition low, are already since a long time aimed at. One aims at a high degree of impact strength at sufficient rigidity. This desired combination of properties is however very difficult to achieve at the desired high filler contents above about 25 weight-% (R.H. Heinold, Conference Reinforced Thermoplastics II, Manchester, 1977, Paper 16, page 3 and figures V and VI). Impact strength is then very low; it can be improved by using as the propylene polymer a propylene-ethylene block copolymer with an ethylene content of up to 30 weight-%, (GB—A—1.362.912 and NL—A—7604935), but this results at relatively low talc contents in insufficient rigidity and at higher talc contents in a hardly improved and unsatisfactory low impact strength.

According to FR—A—2.360.625 a polymer composition contains 80—95 weight-% of a propylene-ethylene block copolymer with 3—20 weight-% of ethylene units, and 5—20 weight-% of a rubbery ethylene-propylene copolymer. The composition may contain e.g. talc, preferably in an amount of up to 23 weight-%. This publication contains no indication that it could be possible to use 30 weight-% or more of talc without a dramatic loss of impact strength. GB—A—1.348.329 mentions a proportion of 15—40 weight-% of talc in compositions useful for sheet production, but preferably no more than 25 weight-% is used. This publication gives no solution for the problem to attain a combination of high impact strength and sufficient rigidity at high talc contents of 30 weight-% or more with propylene polymer compositions intended for the manufacture of moulded articles.

The invention provides a polymer composition with a high filler content that has both rigidity and a high degree of impact strength. The polymer composition according to the invention contains 30—68% by weight of a propylene-ethylene block copolymer with 2—30% by weight of ethylene units, 30—60% by weight of talc and 2—20% by weight of a rubbery ethylene-propylene copolymer, all percentages being calculated to the total composition.

The propylene-ethylene block copolymer may have been prepared in any known way. Use may, for instance, be made of a multi-step process, in which propylene is polymerized in a first step, optionally in the presence of a minor amount of ethylene, and either ethylene by itself or a mixture of propylene and ethylene are polymerized together in a second step in the presence of the polymer formed in the first step. A third step similar to the first may follow, if so desired, etc. If so desired, unconverted monomer may be expelled in between the steps, e.g. by evaporation with or without an inert gas, e.g. nitrogen, being passed through. Another sequence of the steps may also be used, or used may be made of more than two steps with different propylene-ethylene ratios.

The ethylene content of the product of the propylene-polymerization step, the crystalline polypropylene blocks, is preferably 0—3% by weight. The polypropylene blocks may contain a minor amount, e.g. up to 5% by weight, of another 1-alkene with at most 8 carbon atoms per molecule, e.g. 1-butene or 1-hexene.

The ethylene content of the total propylene-ethylene block copolymer is preferably 5—15% by weight. Preference is given to block copolymers that contain rubbery propylene-ethylene copolymer blocks in addition to cystalline polypropylene blocks.

The melt index of the block copolymer, measured according to ASTM D—1238; 230°C; 10 kg, is preferably 0.8—20 g/min

The polymerization for preparing the block copolymer can be effected in the gaseous phase, in the mass, or in a liquid vehicle, e.g. a hydrocarbon with 4—12 carbon atoms per molecule. The catalyst may be any well-known Ziegler catalyst, particularly a combination of a titanium halogenide and an organic aluminium compound, e.g. the combination titanium-trichloride-diethyl-aluminium-chloride or triethyl-aluminium, if so desired with any of the well-known catalyst additives, e.g. a Lewis base. Propylene homopolymer may, or may not, be added to the polymer product obtained in the polymerization in order to obtain the desired propylene-ethylene block copolymer to be used in the composition.

Also the rubbery ethylene-propylene copolymer can be prepared in a known way by means of a Ziegler catalyst, particularly a catalyst based on a vanadium compound. The copolymer preferably contains 68—82 moles % of ethylene units. Furthermore, it preferably contains 0.1—3 moles % of units of a diene monomer, e.g. hexadiene, dicyclopentadiene or ethylidene norbornene. The rubbery copolymer may furthermore contain a minor amount, e.g. up to 10 moles %, of another 1-alkene with 2—8 carbon atoms per molecule. The Mooney viscosity is preferably at least 20, measured according to ISO-R 289 with a cold rotor.

The optimum content of rubbery ethylene-propylene copolymer in the composition decreases with increasing talc content. By preference, the sum of the percentages by weight of rubbery copolymer and talc amounts to 45—62. The content of rubbery ethylene-propylene copolymer amounts to 5—15% by weight, by preference.

2

The talc content of the composition is preferably 35—55%, and most preferably 40—50% by weight. The talc may have been pretreated with adhesion-improving agents and the like in a known way. Preferably a talc is used with a mean particle size of 1—100 $\mu$m, by preference 2—50 $\mu$m, particularly 5—25 $\mu$m.

The composition according to the invention may furthermore contain polyethylene, particularly polyethylene with a density of at least 0.94 g/cm³ and a melt index (ASTM D-1238; 190°C; 2.16 kg) of at most 30, preferably 0.5—10, dg/min. Thus a better flow behaviour of the composition can be achieved. The polyethylene may be present in an amount of, e.g. 1—10% by weight calculated to the total composition, particularly 2—5% by weight. The polyethylene may contain a minor amount of, e.g., at most 10 moles % of one or more other 1-alkenes with 3—8 carbon atoms per molecule, especially 1-butene. If polyethylene is present, the amount of rubbery copolymer may be reduced within the limits specified. Here, too, the sum of the weight percentages of rubbery copolymer, talc and poly-ethylene preferably amounts to 45—62. The polyethylene may have been prepared in a known way, e.g. by means of a Ziegler catalyst.

The composition may contain, in addition to the abovementioned components, the usual amounts of the usual additives, such as stabilizers, pigments, antistatic agents, loosening agents, neutralizing agents, expanding agents, and the like. Titanium dioxide as a pigment may then be present in a concentration of below 5% by weight, preferably in a concentration of 1—3% by weight.

The composition according to the invention can be prepared in a simple way by mixing the components, e.g. by means of a roller, a Banbury mixer or an extruder.

In order to manufacture moulded articles, the minimum demand made on the E modulus in practice is usually 2200 N/mm² and, preferably, 2500 N/mm². The compositions according to the invention readily meet this demand, while they are moreover very impact-resistant, which finds expression in a very high Izod value.

The melt index (230°C; 10 kg) of the composition may range, for instance, between 0.5 and 6 g/min, in dependence on the intended use. At a melt index of 0.8 to 1.4 g/min, the composition according to the invention is particularly suitable to be processed into pallets by injection-moulding or expanding-injection moulding methods. The composition according to the invention, however, is also suitable for a great many other uses.

The invention will be further elucidated with reference to the next non-restricting examples and comparative experiments.

### Comparative Experiments A—D

A propylene-ethylene block copolymer with 10% by weight of ethylene units and a melt index (230°C; 10 kg) of 2.9 g/min was mixed with an amount of talc 'Luzenac OOS' (trade name of the firm Talcs de Luzenac at Luzenac-sur-Ariège, France (particle size 50% >10 $\mu$m)) on a two-roller mill with a roller temperature of 190°C. The rolled sheet was removed from the roller after 5 minutes. The rolled sheets were processed into pressed plates of 3.2 mm thickness. Specimens were sawn from these plates and then tested for the elasticity modulus (according to ASTM D-790) by means of a three-point bending test and for the Izod notch-impact strength (according to ISO-R 180 at 23°C and —30°C). The fragments of the rolled sheets were furthermore used to determine the melt index (according to ASTM D-1238) at 230°C with a 10 kg weight.

The make-up of the compositions and the corresponding properties are compiled in Table I. The results clearly show that the addition of only talc raises the elasticity modulus, which is accompanied, however, by a strong decrease of the notch-impact strength.

### Examples I—VII

The method described under the Comparative Experiments A—D was used to prepare and test compositions to which a rubbery ethylene-propylene copolymer with 67.5% by weight (about 74.5 moles %) of ethylene units and 6% by weight (about 1.7 moles %) of ethylidene-norbornene units with a Mooney viscosity of 70 had been added besides the talc and the propylene-ethylene block copolymer. The make-up and properties of these compositions are also given in Table I.

The results show that the impact strength of compositions of propylene-ethylene block copolymers and talc can be considerably improved by addition of the rubbery ethylene-propylene copolymer, while sufficient rigidity is retained. Comparison of Example II and Comparative experiment B shows, for instance, that much higher notch-impact strengths can be attained at about the same elasticity modulus, while the higher talc content is tolerable.

### Examples VIII—X

The method described under the Examples I—VII was used to prepare and test compositions to which a polyethylene with a density of 0.948 g/cm² and a melt index of 3 dg/min (190°C; 2.16 kg was added besides the talc, the propylene-ethylene block copolymer and the rubbery ethylene-propylene copolymer. In these examples the amount by weight of polyethylene was kept equal to the amount by weight of rubbery ethylene-propylene copolymer. The make-up and the properties of the resulting compositions are also shown in Table I. PE here denotes polyethylene.

3

**0 009 276**

Compared with those of Examples IV—VI, the results of these examples show that a better flow behaviour can be obtained by combination of the rubbery ethylene-propylene copolymer with high-density polyethylene, while the favourable mechanical properties of the compositions are retained.

Examples XI—XIII

The method described under the Examples I—VII was used to prepare and test compositions, wherein however as talc the finer talc type 'Norwegian Talc AT Extra' (particle size 37% <2 $\mu$m) was used. The make-up and the properties of the resulting compositions are also shown in Table I.

Compared to those, of Examples IV—VI, the results of these examples show that the compositions with the finer talc type show a considerably lower melt index. The stiffness and the impact strength are apparently not much influenced by the type of talc used, so that also these compositions show favourable mechanical properties.

TABLE I

| Exp./Ex. | talc % by weight | block copolymer % by weight | rubber % by weight | PE % by weight | E-modulus (N/mm²) | Izod potch-impact strength (kJ/m²) 23°C | Izod potch-impact strength (kJ/m²) —30°C | melt index (g/min) 230°C/10 kg |
|---|---|---|---|---|---|---|---|---|
| A | 0 | 100 | — | — | 1125 | 31.3 | 4.7 | 2.9 |
| B | 33 | 67 | — | — | 3045 | 10.4 | 3.3 | 2.4 |
| C | 44 | 56 | — | — | 4005 | 7.2 | 2.8 | 1.9 |
| D | 52 | 48 | — | — | 4650 | 5.8 | 2.3 | 1.4 |
| I | 31 | 62 | 7 | — | 2335 | 30.8 | 5.9 | 1.6 |
| II | 41 | 52 | 7 | — | 3030 | 26.2 | 4.9 | 1.3 |
| III | 49 | 44 | 7 | — | 3165 | 16.6 | 4.1 | 0.7 |
| IV | 30 | 58 | 12 | — | 2280 | 57.1 | 7.9 | 1.2 |
| V | 39 | 49 | 12 | — | 2285 | 52.2 | 8.5 | 0.7 |
| VI | 46 | 42 | 12 | — | 2720 | 44.8 | 7.5 | 0.5 |
| VII | 37 | 46 | 17 | — | 1760 | 59.2 | 20.0 | 0.6 |
| VIII | 30 | 58 | 6 | 6 | 2245 | 50.7 | 6.2 | 1.3 |
| IX | 39 | 49 | 6 | 6 | 2755 | 30.3 | 5.3 | 0.9 |
| X | 46 | 42 | 6 | 6 | 3060 | 23.6 | 4.5 | 0.8 |
| XI | 30 | 58 | 12 | — | 1945 | 47.7 | 9.0 | 0.8 |
| XII | 39 | 49 | 12 | — | 2430 | 47.5 | 7.2 | 0.2 |
| XIII | 46 | 42 | 12 | — | 2590 | 44.8 | 8.4 | 0.05 |

Comparative Experiments E—H and Examples XIV—XX

The method described under the Comparative Experiments A—D and the Examples I—VII was used to prepare and test compositions, wherein however as propylene-ethylene block copolymer a block copolymer with 8% by weight of ethylene units and a melt index (230°C; 10 kg) of 11.0 g/min. was used. The make-up and the properties of the resulting compositions are shown in Table II.

Example XXI—XXIII

The method described under the Examples I—VII was used to prepare and test compositions, wherein however as propylene-ethylene block copolymer a block copolymer with 8% by weight of ethylene units and a melt index (230°C; 10 kg) of 11.0 g/min., and as rubbery ethylene-propylene copolymer a copolymer with 74.0% by weight of ethylene units and 1.9% by weight of hexadiene units with a Mooney viscosity of 65 were used. The make-up and the properties of the resulting compositions are also shown in Table II.

TABLE II

| Exp./Ex. | talc % by weight | block copolymer % by weight | rubber % by weight | E-modulus (N/mm²) | Izod notch-impact strength (kJ/m²) | | melt index (g/min) 230°C/10 kg |
|---|---|---|---|---|---|---|---|
| | | | | | 23°C | −30°C | |
| E | 0 | 100 | — | 1610 | 9.5 | 2.8 | 11.0 |
| F | 33 | 67 | — | 3445 | 3.6 | 1.8 | 7.6 |
| G | 44 | 56 | — | 4670 | 3.0 | 1.5 | 6.5 |
| H | 52 | 48 | — | 4880 | 2.7 | 1.4 | 4.6 |
| XIV | 31 | 62 | 7 | 2585 | 8.4 | 2.7 | 5.5 |
| XV | 41 | 52 | 7 | 3330 | 7.9 | 2.3 | 4.2 |
| XVI | 49 | 44 | 7 | 3530 | 6.2 | 2.4 | 4.2 |
| XVII | 30 | 58 | 12 | 2190 | 18.3 | 4.0 | 4.3 |
| XVIII | 39 | 49 | 12 | 2860 | 19.1 | 3.9 | 3.0 |
| XIX | 46 | 42 | 12 | 2990 | 18.4 | 4.4 | 1.8 |
| XX | 37 | 46 | 17 | 2000 | 37.8 | 8.0 | 2.4 |
| XXI | 31 | 62 | 7 | 2720 | 7.9 | 2.5 | 6.0 |
| XXII | 49 | 44 | 7 | 3995 | 4.8 | 1.9 | 5.6 |
| XXIII | 39 | 49 | 12 | 2945 | 16.9 | 3.7 | 3.8 |

**0 009 276**

**Claims for the Contracting States: BE CH DE FR GB IT NL SE**

1. Polymer composition containing 30—68% by weight of a propylene-ethylene block copolymer with 2—30% by weight of ethylene units, 30—60% by weight of talc, and 2—20% by weight of a rubbery ethylene-propylene copolymer.

2. Polymer composition according to claim 1, characterized in that the sum of the percentages by weight of rubbery copolymer and talc is 45—62.

3. Polymer composition according to claim 1 or 2, characterized in that the percentage by weight of rubbery ethylene-propylene copolymer is 5—15.

4. Polymer composition according to any one of the claims 1—3, characterized in that the percentage by weight of talc is 35—55.

5. Polymer composition according to any one of the claims 1—4, characterized in that the talc has a mean particle size of 2—50 $\mu$m.

6. Polymer composition according to any one of the claims 1—5, characterized in that the ethylene content of the propylene-ethylene block copolymer is 5—15% by weight.

7. Polymer composition according to any one of the claims 1—6, characterized in that the propylene-ethylene block copolymer contains rubbery propylene-ethylene copolymer blocks in addition to crystalline polypropylene blocks.

8. Polymer composition according to any one of the claims 1—7, characterized in that the rubbery ethylene-propylene copolymer contains 68—82 moles % of ethylene units.

9. Polymer composition according to any one of the claims 1—8, characterized in that the composition contains 1—10% by weight of polyethylene with a density of at least 0.94 g/cm³.

10. Moulded article made of a polymer composition according to any one of the claims 1—9.

**Claims for the Contracting State: AT**

1. Process for the preparation of a polymer composition, characterized in that a polymer composition is prepared containing 30—68% weight of a propylene-ethylene block copolymer with 2—30% by weight of ethylene units, 30—60% by weight of talc, and 2—20% by weight of a rubbery ethylene-propylene copolymer.

2. Process according to claim 1, characterized in that a polymer composition is prepared wherein the sum of the percentages by weight of rubbery ethylene-propylene copolymer and talc is 45—62.

3. Process according to claim 1 or 2, characterized in that a polymer composition is prepared wherein the percentage by weight of rubbery ethylene-propylene copolymer is 5—15.

4. Process according to any one of the claims 1—3, characterized in that a polymer composition is prepared wherein the percentage by weight of talc is 35—55.

5. Process according to any one of the claims 1—4, characterized in that a polymer composition is prepared wherein the talc has a mean particle size of 2—50 $\mu$m.

6. Process according to any one of the claims 1—5, characterized in that a polymer composition is prepared containing a propylene-ethylene block copolymer with an ethylene content of 5—15% by weight.

7. Process according to any one of the claims 1—6, characterized in that a polymer composition is prepared containing a propylene-ethylene block copolymer which contains rubbery propylene-ethylene copolymer blocks in addition to crystalline polypropylene blocks.

8. Process according to any one of the claims 1—7, characterized in that a polymer composition is prepared containing a rubbery ethylene-propylene copolymer with 68—82 moles % of ethylene units.

9. Process according to any one of the claims 1—8, characterized in that a polymer composition is prepared containing 1—10% by weight of polyethylene with a density of at least 0.94 g/cm³.

10. Moulded article made of a polymer composition prepared using the process according to any one of the claims 1—9.

**Revendications pour les Etats contractants: BE CH DE FR GB IT NL SE**

1. Composition de polymère contenant 30—68% en poids d'un copolymère séquencé de propylène-éthylène, avec 2—30% en poids d'unités d'éthylène, 30—60% en poids de talc et 2—20% en poids d'un copolymère caoutchouteux d'éthylène-propylène.

2. Composition de polymère selon la revendication 1, caractérisée en ce que la somme des pourcentages en poids du copolymère caoutchouteux et du talc est de 45—62.

3. Composition de polymère selon l'une des revendications 1 et 2, caractérisé en ce que le pourcentage en poids du copolymère caoutchouteux d'éthylène-propylène est de 5—15.

4. Composition de polymère selon l'une des revendications 1 à 3, caractérisée en ce que le pourcentage en poids du talc est de 35—55.

5. Composition de polymère selon l'une des revendications 1 à 4, caractérisée en ce que le talc a une grosseur de grain moyenne de 2—50 $\mu$m.

6. Composition de polymère selon l'une des revendications 1 à 5, caractérisée en ce que la teneur en éthylène du copolymère séquencé de propylène-éthylène est de 5—15% en poids.

7. Composition de polymère selon l'une des revendications 1 à 6, caractérisée en ce que le copolymère séquencé de propylène-éthylène contient des séquences de copolymère caoutchouteux de propylène-éthylène en sus des séquences cristallines de polypropylène.

8. Composition de polymère selon l'une des revendications 1 à 7, caractérisée en ce que le copolymère caoutchouteux d'éthylène-propylène contient 68—82 moles % d'unités d'éthylène.

9. Composition de polymère selon l'une des revendications 1 à 8, caractérisée en ce que la composition conteint 1—10% en poids de polyéthylène avec une densité d'au moins 0,94 g/cm$^3$.

10. Objet moulé fabriqué à partir d'une composition de polymère selon l'une des revendications 1 à 9.

**Revendications pour l'Etat contractant: AT**

1. Procédé pour la preparation d'une composition de polymère, caractérisé en ce qu'on prépare une composition de polymère contenant 30—68% en poids d'un copolymère séquencé de propylène-éthylène, avec 2—30% en poids d'unités d'éthylène, 30—60% en poids de talc et 2—20% en poids d'un copolymère caoutchouteux d'éthylène-propylène.

2. Procédé selon la revendication 1, caractérisé en ce qu'on prépare une composition de polymère dans laquelle la somme des pourcentages en poids du copolymère caoutchouteux d'ethylène-propylène et du talc est de 45—62.

3. Procédé selon l'une des revendications 1 et 2, caractérisé en ce qu'on prépare une composition de polymère dans laquelle le pourcentage en poids du copolymère caoutchouteux d'ethylène-propylène est de 5—15.

4. Procédé selon l'une des revendications 1 à 3, caractérisé en ce qu'on prépare une composition de polymère dan laquelle le pourcentage en poids du talc est de 35—55.

5. Procédé selon l'une des revendications 1 à 4, caractérisé en ce qu'on prépare une composition dans laquelle le talc a une grosseur de grain moyenne de 2—50 $\mu$m.

6. Procédé selon l'une des revendications 1 à 5, caractérisé en ce qu'on prépare une composition de polymere contenant un copolymère séquencé de propylène-éthylène dont la teneur on éthylène est de 5—15% en poids.

7. Procédé selon l'une des revendications 1 à 6, caractérisé en ce qu'on prépare une composition de polymère contenant un copolymère séquencé de propylène-éthylène qui contient des séquences de copolymère caoutchouteux de propylène-éthylène en sus des séquences cristallines de polypropylène.

8. Procédé selon l'une des revendications 1 à 7, caractérisé en ce qu'on prépare une composition de polymère contenant un copolymère caoutchouteux d'éthylène-propylène qui contient 68—82 moles % d'unités d'éthylène.

9. Procédé selon l'une des revendications 1 à 8, caractérisé en ce qu'on prépare une composition de polymère contenant 1—10% en poids de polyéthylène avec une densité d'au moins 0,94 g/cm$^3$.

10. Objet moulé fabriqué à partir d'une composition de polymère préparée par le procédé selon l'une des revendications 1 à 9.

**Patentansprüche für die Vertragsstaaten: BE CH DE FR GB IT NL SE**

1. Polymerzusammensetzung, enthaltend 30—68 Gew.-% eines Propylen-Äthylen-Blockcopolymers mit 2—30 Gew.-% Äthylen-einheiten, 30—60 Gew.-% Talk und 2—20 Gew.-% eines kautschukartigen Äthylen-Propylencopolymers.

2. Polymerzusammensetzung nach Anspruch 1, dadurch gekennzeichnet, daß die Summe der Gewichtsprozentanteile an kautschukartigem Copolymer und Talk 45—62 beträgt.

3. Polymerzusammensetzung nach Anspruch 1 oder 2, dadurch gekennzeichnet, daß der Gewichtsprozentanteil an kautschukartigem Äthylen-Propylencopolymer 5—15 beträgt.

4. Polymerzusammensetzung nach einem der Ansprüche 1—3, dadurch gekennzeichnet, daß der Gewichtsprozentanteil an Talk 35—55 beträgt.

5. Polymerzusammensetzung nach einem der Ansprüche 1—4, dadurch gekennzeichnet, daß der Talk eine mittlere Teilchengröße 2—50 $\mu$m hat.

6. Polymerzusammensetzung nach einem der Ansprüche 1—5, dadurch gekennzeichnet, daß der Äthylengehalt des Propylen-Äthylen-Blockcopolymers 5—15 Gew.-% beträgt.

7. Polymerzusammensetzung nach einem der Ansprüche 1—6, dadurch gekennzeichnet, daß das Propylen-Äthylen-Blockcopolymer kautschukartige Propylen-Äthylencopolymerblöcke zusätzlich zu kristallinen Polypropylenblöcken enthält.

8. Polymerzusammensetzung nach einem der Ansprüche 1—7, dadurch gekennzeichnet, daß das kautschukartige Äthylen-Propylencopolymer 68—82 Mol-% Äthyleneinheiten enthält.

9. Polymerzusammensetzung nach einem der Ansprüche 1—8, dadurch gekennzeichnet, daß die Zusammensetzung 1—10 Gew.-% Polyäthylen mit einer Dichte von mindestens 0,94 g/cm$^3$ enthält.

10. Formgegenstände, hergestellt aus einer Polymerzusammensetzung nach einem der Ansprüche 1—9.

**Patentansprüche für den Vertragsstaat: AT**

1. Verfahren zur Herstellung einer Polymerzusammensetzung, dadurch gekennzeichnet, daß eine Polymerzusammensetzung hergestellt wird, enthaltend 30—68 Gew.-% eines Propylen-Äthylen-Blockcopolymers mit 2—30 Gew.-% Äthyleneinheiten, 30—60 Gew.-% Talk und 2—20 Gew.-% eines kautschukartigen Äthylen-Propylencopolymers.

2. Verfahren nach Anspruch 1, dadurch gekennzeichnet, daß eine Polymerzusammensetzung hergestellt wird, in der die Summe der Gewichtsprozentanteile an kautschukartigem Copolymer und Talk 45—62 beträgt.

3. Verfahren nach Anspruch 1 oder 2, dadurch gekennzeichnet, daß eine Polymerzusammensetzung hergestellt wird, in der der Gewichtsprozentanteil an kautschukartigem Äthylen-Propylencopolymer 5—15 beträgt.

4. Verfahren nach einem der Ansprüche 1—3, dadurch gekennzeichnet, daß eine Polymerzusammensetzung hergestellt wird, in der der Gewichtsprozentanteil an Talk 35—55 beträgt.

5. Verfahren nach einem der Ansprüche 1—4, dadurch gekennzeichnet, daß eine Polymerzusammensetzung hergestellt wird, in der der Talk eine mittlere Teilchengröße von 2—50 $\mu$m hat.

6. Verfahren nach einem der Ansprüche 1—5, dadurch gekennzeichnet, daß eine Polymerzusammensetzung hergestellt wird, in der der Äthylengehalt des Propylen-Äthylen-Blockcopolymers 5—15 Gew.-% beträgt.

7. Verfahren nach einem der Ansprüche 1—6, dadurch gekennzeichnet, daß eine Polymerzusammensetzung hergestellt wird, in der das Propylen-Athylen-Blockcopolymer kautschukartige Propylen-Äthylencopolymerblöcke zusätzlich zu kristallinen Polypropylenblöcken enthält.

8. Verfahren nach einem der Ansprüche 1—7, dadurch gekennzeichnet, daß eine Polymerzusammensetzung hergestellt wird, in der das kautschukartige Äthylen-Propylencopolymer 68—82 Mol-% Äthyleneinheiten enthält.

9. Verfahren nach einem der Ansprüche 1—8, dadurch gekennzeichnet, daß eine Polymerzusammensetzung hergestellt wird, in der die Zusammensetzung 1—10 Gew.-% Polyäthylen mit einer Dichte von mindestens 0,94 g/cm³ enthält.

10. Formgegenstände aus einer gemäß dem Verfahren nach einem der Ansprüche 1—9 hergestellten Polymerzusammensetzung.